# EUROPÄISCHE PATENTSCHRIFT

(11) **EP 2 313 222 B1**
(45) Veröffentlichungstag und Bekanntmachung des Hinweises auf die Patenterteilung: **19.09.2012**
(21) Anmeldenummer: 09776923.6
(22) Anmeldetag: 02.07.2009
(51) Int. Cl.: B23B 31/113, B60B 23/04, B65D 45/00, F16D 1/112, F16H 57/02, F16J 13/02

(54) **ANORDNUNG ZUM ABDICHTEN EINER AUSNEHMUNG IN EINEM GRUNDKÖRPER**
ARRANGEMENT FOR SEALING A RECESS IN A BASE BODY
SYSTÈME POUR RENDRE ÉTANCHE UN ÉVIDEMENT DANS UN CORPS DE BASE

(30) Priorität: 30.07.2008 DE 102008035519
(43) Veröffentlichungstag der Anmeldung: 27.04.2011
(73) Patentinhaber: SEW-EURODRIVE GmbH & Co. KG, 76646 Bruchsal (DE)
(72) Erfinder: KERSCHBAUM, Martin, 76139 Karlsruhe (DE)
(86) Internationale Anmeldenummer: PCT/EP2009/004782
(87) Internationale Veröffentlichungsnummer: WO 2010/012347

(56) Entgegenhaltungen:
- WO-A-02/055902
- DE-A1- 2 352 352
- DE-A1- 2 937 168
- DE-A1- 10 003 924

## Beschreibung

Die Erfindung betrifft eine Anordnung zum Abdichten einer Ausnehmung in einem Grundkörper.

Es ist bekannt, dass Getriebegehäuse Ausnehmungen umfassen, durch die beispielsweise eine Welle bei Montage einführbar ist. Solche Ausnehmungen werden üblicherweise mit einem Deckel abgedeckt, der eine Dichtung aufweist und an das Getriebegehäuse angeschraubt wird unter Verwendung mehrerer Schrauben.

Aus der gattungsgemäßes DE 2 352 352 A ist ein druckdichter Deckelverschluss für Gefäße mit Überdruck oder Unterdruck bekannt, wobei eine Bajonettkontur an der Berührfläche zum Grundkörper hin ausgebildet ist. Eine Pendeldichtung ist ebenfalls in einer Nut im Bereich der Berührfläche eingebracht.

Der Erfindung liegt daher die Aufgabe zugrunde, die Herstellung einer Antriebskomponente, wie Getriebe oder Elektromotor zu vereinfachen.

Erfindungsgemäß wird die Aufgabe bei der Anordnung zum Abdichten einer Ausnehmung in einem Grundkörper nach den in Anspruch 1 angegebenen Merkmalen gelöst.

Wichtige Merkmale der Erfindung bei der Anordnung zum Abdichten einer Ausnehmung in einem Grundkörper sind, dass eine Haube über den Bereich der Ausnehmung auf den Grundkörper aufgesetzt ist, insbesondere den Bereich der Ausnehmung abdeckend,
wobei zumindest im Verbindungsbereich der Haube mit dem Grundkörper eine Dichtung an der Haube vorgesehen ist,
wobei an der Haube mindestens eine Bajonettkontur vorgesehen ist, die mit im Grundkörper vorgesehenen Schrauben, insbesondere mit deren Schraubenköpfen, zusammenwirkt, insbesondere zur Herstellung einer dichten Verbindung zwischen Grundkörper und Haube.

Von Vorteil ist dabei, dass eine schnelle und einfache Verbindung ermöglicht ist. Insbesondere bei Wartungsarbeiten ist die Haube schnell und einfach lösbar und wieder befestigbar, ohne dass Schrauben in den Grundkörper einzuschrauben sind. Der Anpressdruck ist mittels der Kontur klar definierbar und vorgebbar. Somit muss kein Anzugsmoment für Schrauben beim Verbinden der Haube vorgegeben werden.

Bei einer vorteilhaften Ausgestaltung ist der Grundkörper ein Getriebegehäuse oder eine andere Antriebskomponente, wie Elektromotor, Umrichtermotor, Getriebemotor, Umrichtergetriebemotor, insbesondere durch dessen Ausnehmung ein Wellenende herausragt. Von Vorteil ist dabei, dass die Ausnehmung schnell, einfach und dicht verschließbar ist.

Bei einer vorteilhaften Ausgestaltung ist die Bajonettkontur als durchgehende oder nur in die Innenseite eingeprägte Ausnehmung in der Haubenwand ausgeführt. Von Vorteil ist dabei, dass die Kontur in der Haube selbst eingebracht ist und somit kein separates Teil notwendig ist.

Bei einer vorteilhaften Ausgestaltung ist die Wandstärke im Bereich der Bajonettkontur verdickt. Von Vorteil ist dabei, dass die Stabilität ohne großen Zusatzaufwand gewährleistbar ist.

Bei einer vorteilhaften Ausgestaltung weist die Haube ein Rotationskörper ist, in weichen die Bajonettkontur eingearbeitet ist, oder die Haube einem Rotationskörper entspricht, bei dem die Wandstärke in den Bereichen der Bajonettkonturen verdickt ausgeführt sind. Von Vorteil ist dabei, dass die Fertigung einfach ausführbar ist.

Bei einer vorteilhaften Ausgestaltung ist die Dichtung in einer Ringnut der Haube vorgesehen. Von Vorteil ist dabei, dass eine einfache Maßnahme zur Schaffung einer dichten Verbindung ausreicht. Insbesondere ist ein O-Ring in die Nut einlegbar, dessen Anpressdruck mittels der Bajonettkontur definierbar ist

Bei einer vorteilhaften Ausgestaltung ist die Dichtung an der Außenseite der Haube vorgesehen, insbesondere wobei der Bereich der Bajonettkontur von außen abgedeckt ist. Von Vorteil ist dabei, dass die Fertigung der Kontur einfach ist, beispielsweise durch Ausfräsen, und trotzdem eine nach außen dichte Verbindung schaffbar ist, insbesondere ohne zusätzliche Teile sondern durch entsprechend axial breite Ausführung eines Dichtelements, nämlich der Dichtung.

Bei einer vorteilhaften Ausgestaltung ist die Dichtung anvulkanisiert, aufgeklebt oder kraftschlüssig verbunden. Von Vorteil ist dabei, dass eine genügend dichte Verbindung zwischen Haube und Dichtung schaffbar ist.

Bei einer vorteilhaften Ausgestaltung sind am Umfang der Haube zwei, drei, vier oder mehr Bajonettkonturen vorgesehen. Von Vorteil ist dabei, dass ein gleichmäßiger Anpressdruck am gesamten Umfang der Dichtung beziehungsweise der Haube erzeugbar ist.

Bei einer vorteilhaften Ausgestaltung sind statt der Schrauben mit Schraubenköpfen entsprechend ähnlich ausgeformte Teile im Grundkörper zur Zusammenwirkung mit den Bajonettkonturen vorgesehen oder der Grundkörper ist selbst entsprechend ausgeformt. Von Vorteil Ist dabei, dass sogar ohne Schrauben die Verbindung herstellbar ist und somit kein Einschrauben von Schrauben erforderlich ist.

Bei einer vorteilhaften Ausgestaltung ist die Haube aus Stahl, Edelstahl oder Kunststoff ausgeführt. Von Vorteil ist dabei, dass bei Kunststoff die Kontur an der Innenseite einbringbar ist und bei Stahl oder Edelstahl die Kontur durchgehend ausführbar ist.

Bei einer vorteilhaften Ausgestaltung weist die Bajonettkontur eine Einlegeposition, eine Schräge und einen Einrastbereich auf. Von Vorteil ist dabei, dass eine formschlüssige Verbindung erzielbar ist und auch ein durch die Bajonettkontur definierter Anpressdruck gewährleistbar ist.

Bei einer vorteilhaften Ausgestaltung wird die Dichtung beim Bestätigen des Bajonettverschlusses auf den Grundkörper aufgedrückt und verformt, so dass eine dichte Verbindung entsteht. Von Vorteil ist dabei, dass die Verbindung schnell und einfach herstellbar ist und außerdem die Dichtung in vordefinierbarer Weise angepresst wird. Durch die Verformungen ist es ermöglicht, dass die Dichtung sich auch in Mikrorauhigkeiten einfügt und daher eine auch im Mikrobereich dichte Verbindung herstellbar ist.

Weitere Vorteile ergeben sich aus den Unteransprüchen.

### Bezugszeichenliste

1 Grundkörper
2 Abdeckhaube
3 Dichtung
4 Bajonettkontur
5 Schraube
11 Grundkörper
12 Abdeckhaube
13 Dichtung
14 Bajonettkontur
15 Schraube
30 Einlegeposition
31 Anpressphase
32 Einrastposition

Die Erfindung wird nun anhand von Abbildungen näher erläutert:

In der Figur 1 ist eine erfindungsgemäße Haube aus Kunststoff zum Abdecken einer Ausnehmung in einem Grundkörper gezeigt.

In der Figur 2 ist eine zugehörige Draufsicht auf die Haube gezeigt.

In der Figur 3 ist eine zugehörige Seitenansicht auf die Haube gezeigt.

In der Figur 4 ist eine erfindungsgemäße Haube aus Stahl, insbesondere Edelstahl, zum Abdecken einer Ausnehmung in einem Grundkörper gezeigt.

In der Figur 5 ist eine zugehörige Draufsicht auf die Haube gezeigt.

In der Figur 6 ist eine zugehörige Seitenansicht auf die Haube gezeigt.

In der Figur 7 ist eine in der Haube vorgesehene Bajonettkontur gezeigt.

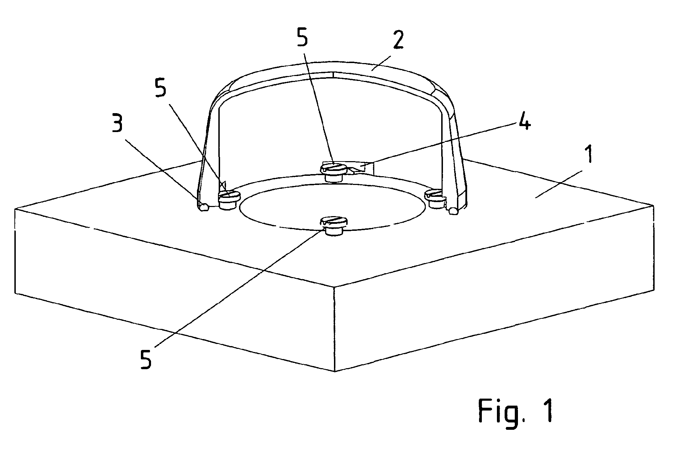

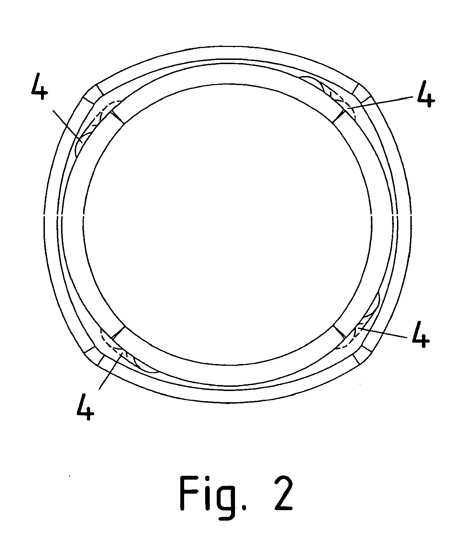

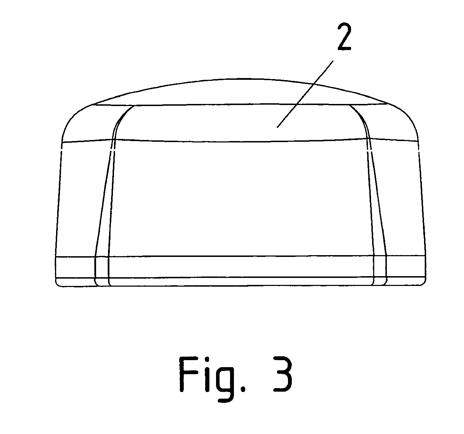

In den Figuren 1 bis 3 ist die Haube als Abdeckhaube 2 zur Abdeckung einer Ausnehmung in einem Grundkörper 1 vorgesehen. Der Grundkörper ist beispielsweise ein Getriebe oder eine andere Antriebskomponente. Dabei ragt beispielsweise durch die Ausnehmung ein Wellenende heraus. Die Abdeckhaube 2 weist eine Dichtung 3 auf, die als O-Ring in eine Ringnut der Haube eingelegt ist.

Beim Andrücken der Haube 2 an den Grundkörper 1 wird die Dichtung verquetscht und dichtet somit den Verbindungsbereich zwischen Haube 2 und Grundkörper 1 ab.

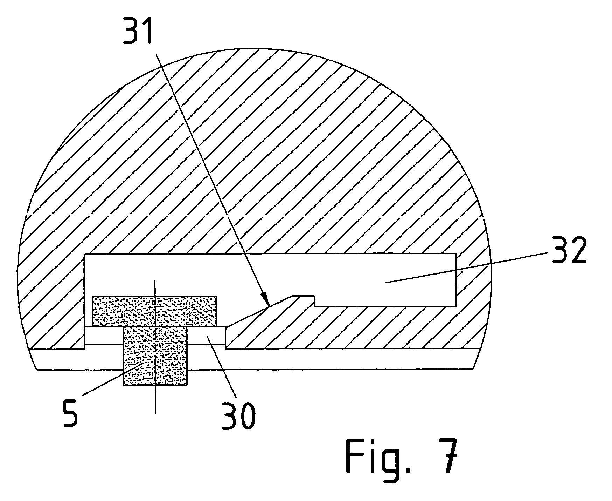

Das Andrücken wird mittels in der Wand der Haube vorgesehenen Bajonettkonturen bewerkstelligt, die mit Schraubenköpfen von in dem Grundkörper vorgesehenen Schrauben zusammenwirken. Dabei ist die prinzipielle Ausformung der Bajonettkontur 4 in der Figur 7 vergrößert dargestellt

Die Bajonettkontur ist an der Innenwand der Haube eingelassen. Hierzu ist die Wandstärke in dem umgebenden Bereich der Bajonettkontur 4 verstärkt ausgeführt, so dass die ansonsten als Rotationskörper ausgebildete Haube dort eine Abweichung vom idealen Rotationskörper aufweist.

In axialer Richtung, also in Normalenrichtung zur Ebene, in welcher der Verbindungsbereich zwischen Haube und Grundkörper vorgesehen ist, wird die Haube zunächst aufgesetzt auf den Grundkörper. Beim Aufsetzen weist die Bajonettkontur an der Einlegeposition 30 eine zum Grundkörper hin gerichtete Ausnehmung zur Aufnahme der Schraubenköpfe auf.

Nach dem Aufsetzen wird die Haube um die Achse gedreht. Hierbei werden die Schraubenköpfe entlang einer Schräge, nämlich der Anpressphase 31, geführt und somit die Haube in Richtung auf den Grundkörper gepresst, da die Schräge eine beim Drehen zunehmenden axialen Abstand vom Grundkörper beziehungsweise von der den Verbindungsbereich enthaltenden Ebene aufweist. Am Ende der sich in Umfangsrichtung erstreckenden Bajonettkontur ist eine Einrastposition 32 vorgesehen, in welcher die Kontur und somit auch die Schraubenköpfe der Schrauben 5 einen etwas geringeren axialen Abstand zur Ebene aufweisen als der durch die Schräge gegebene maximale Absland beträgt. Somit ist ein formschlüssiges Einrasten der Schraubenköpfe gewährleistet.

Die Rotationsachse des beschriebenen, in der Haube gedacht vorgesehenen Rotationskörpers ist in der axialen Richtung orientiert.

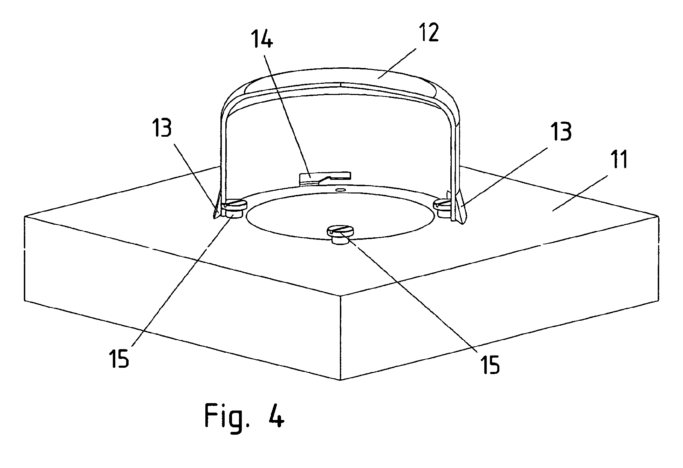

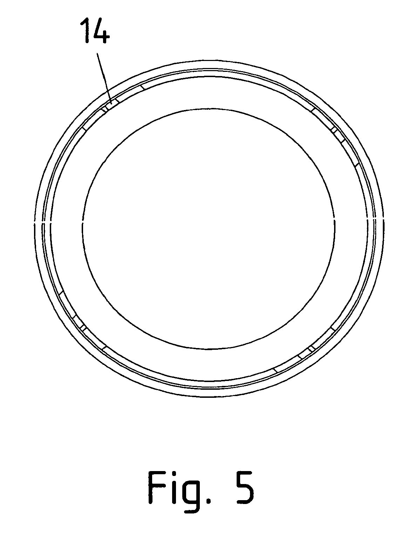

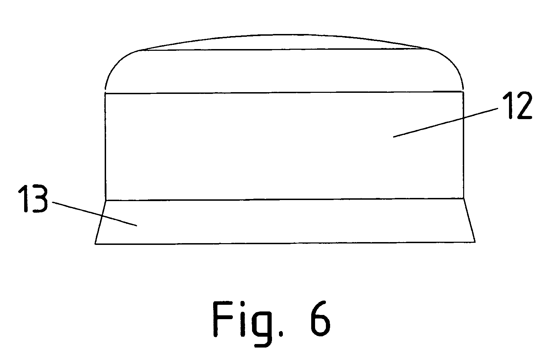

In den Figuren 4, 5 und 6 ist eine Abdeckhaube 12 aus Stahl oder sogar Edelstahl gezeigt, die sich einerseits von der vorbeschriebenen Haube darin unterscheidet, dass die mit den Schraubenköpfen der im Grundkörper 11 vorgesehenen Schrauben 15 zusammenwirkende Bajonettkontur 14 als Ausnehmung in der Wand der Haube 12 ausgeführt ist und andererseits die Dichtung 13 an der Außenseite der Haube 12 vorgesehen ist, wobei diese in axialer Richtung zum Grundkörper 11 hin etwas übersteht.

Dabei ist die Dichtung13 ist an die Haube 12 anvulkanisiert, angegossen oder angespritzt und ebenso wie die Dichtung 3 aus elastischem Material, wie beispielsweise gummihaltigem Material oder einem silikonhaltigem Kunststoff ausgeführt.

Die Dichtung überdeckt von außen den Bereich der Bajonettkontur 14.

Beim Anpressen wird der in axialer Richtung etwas am Grundkörper der Haube 12 etwas heraus ragende Bereich auf den Grundkörper 11 gequetscht und verformt. Somit ist auch hierbei eine dichte Verbindung erreicht.

Somit ist die mit dem Grundkörper 11 verbundene Haube12 insgesamt abgedichtet verbunden, Insbesondere auch zur Umgebung hin.

Bei weiteren erfindungsgemäßen Ausführungsbeispielen wird die Dichtung 13 klebeverbunden mit der Haube 11 oder als Profildichtung übergestülpt und aufgespannt, also kraftschlüssig verbunden.

Bei weiteren erfindungsgemäßen Ausführungsbeispielen wird statt der Schrauben mit den radial herausragenden Schraubenköpfen ein anderes entsprechend geformtes, mit dem Grundkörper verbundenes Teil vorgesehen oder der Grundkörper selbst entsprechend ausgeformt.

## Patentansprüche

1. Anordnung zum Abdichten einer Ausnehmung in einem Grundkörper (1, 11),
wobei eine Haube über den Bereich der Ausnehmung auf den Grundkörper (1, 11) aufgesetzt ist, insbesondere den Bereich der Ausnehmung abdeckend,
wobei diese Haube eine Innenseite und eine Außenseite aufweist,
wobei zumindest im Verbindungsbereich der Haube mit dem Grundkörper (1, 11) eine Dichtung (3, 13) an der Haube vorgesehen ist,
wobei an der Haube mindestens eine Bajonettkontur (4, 14) vorgesehen ist, die mit im Grundkörper (1, 11) vorgesehenen Schrauben (5, 15), insbesondere mit deren Schraubenköpfen, zusammenwirkt, zur Herstellung einer dichten Verbindung zwischen Grundkörper (1, 11) und Haube,
**dadurch gekennzeichnet, dass**
die Dichtung (3, 13) an der Außenseite der Haube vorgesehen ist,
und dass die Bajonettkontur (4, 14) als nur in die Innenseite eingeprägte Ausnehmung in der Haubenwand ausgeführt ist.

2. Anordnung nach Anspruch 1,
**dadurch gekennzeichnet, dass**
die Bajonettkontur (4, 14) als durchgehende Ausnehmung in der Haubenwand ausgeführt Ist.

3. Anordnung nach mindestens einem der vorangegangenen Ansprüche,
**dadurch gekennzeichnet, dass**
der Grundkörper (1, 11) ein Getriebegehäuse oder eine andere Antriebskomponente, wie Elektromotor, Umrichtermotor, Getriebemotor, Umrichtergetriebemotor, ist, insbesondere durch dessen Ausnehmung ein Wellenende herausragt.

4. Anordnung nach mindestens einem der vorangegangenen Ansprüche,
**dadurch gekennzeichnet, dass**
die Wandstärke Im Bereich der Bajonettkontur (4, 14) verdickt Ist.

5. Anordnung nach mindestens einem der vorangegangenen Ansprüche,
**dadurch gekennzeichnet, dass**
die Haube ein Rotationskörper ist, in welchen die Bajonettkontur (4, 14) eingearbeitet ist, oder die Haube einem Rotationskörper entspricht, bei dem die Wandstärke in den Bereichen der Bajonettkonturen (4, 14) verdickt ausgeführt sind.

6. Anordnung nach mindestens einem der vorangegangenen Ansprüche,
**dadurch gekennzeichnet, dass**
die Dichtung (3, 13) in einer Ringnut der Haube vorgesehen ist

7. Anordnung nach mindestens einem der vorangegangenen Ansprüche,
**dadurch gekennzeichnet, dass**
die Dichtung (3, 13) anvulkanisiert, aufgeklebt oder kraftschlüssig verbunden ist.

8. Anordnung nach mindestens einem der vorangegangenen Ansprüche,
**dadurch gekennzeichnet, dass**
am Umfang der Haube zwei, drei, vier oder mehr Bajonettkonturen (4, 14) vorgesehen sind.

9. Anordnung nach mindestens einem der vorangegangenen Ansprüche,
**dadurch gekennzeichnet, dass**
statt der Schrauben (5, 15) mit Schraubenköpfen entsprechend ähnlich ausgeformte Teile im Grundkörper (1, 11) zur Zusammenwirkung mit den Bajonettkonturen (4, 14) vorgesehen sind oder der Grundkörper (1, 11) selbst entsprechend ausgeformt ist.

10. Anordnung nach mindestens einem der vorangegangenen Ansprüche,
**dadurch gekennzeichnet, dass**
die Haube aus Stahl, Edelstahl oder Kunststoff ausgeführt ist.

11. Anordnung nach mindestens einem der vorangegangenen Ansprüche,
**dadurch gekennzeichnet, dass**
die Bajonettkontur (4, 14) eine Einlegeposition (30), eine Schräge und einen Einrastbereich aufweist.

12. Anordnung nach mindestens einem der vorangegangenen Ansprüche,
**dadurch gekennzeichnet, dass**
die Dichtung (3, 13) beim Betätigen des Bajonettverschlusses auf den Grundkörper (1, 11) aufgedrückt und verformt wird, so dass eine dichte Verbindung entsteht.

13. Anordnung nach mindestens einem der vorangegangenen Ansprüche,
**dadurch gekennzeichnet, dass**
der Bereich der Bajonettkontur (4, 14) von außen mittels der Dichtung (3, 13) abgedeckt Ist.

## Claims

1. An arrangement for sealing off a cutout in a base body (1, 11),
with a hood being placed over the region of the cutout on the base body (1, 11), in particular covering the region of the cutout,
this hood having an inside and an outside,
with a seal (3, 13) being provided on the hood at least in the region of connection of the hood to the base body (1, 11),
with at least one bayonet contour (4, 14) being provided on the hood, which contour cooperates with screws (5, 15) provided in the base body (1, 11), in particular with their screw heads, for the production of a hermetic connection between the base body (1, 11) and hood,
**characterised in that**
the seal (3, 13) is provided on the outside of the hood,
and **in that** the bayonet contour (4, 14) is embodied as a cutout in the hood wall which is formed only into the inside.

2. An arrangement according to Claim 1, **characterised in that** the bayonet contour (4, 14) is embodied as a through cutout in the hood wall.

3. An arrangement according to at least one of the preceding claims, **characterised in that** the base body (1, 11) is a gear housing or another drive component, such as an electric motor, inverter motor, gear motor, inverter gear motor, in particular a shaft end projects out through the cutout thereof.

4. An arrangement according to at least one of the preceding claims, **characterised in that** the wall thickness in the region of the bayonet contour (4, 14) is thickened.

5. An arrangement according to at least one of the preceding claims, **characterised in that** the hood is a rotary body into which the bayonet contour (4, 14) is machined, or the hood corresponds to a rotary body, in which the wall thickness are [sic] made thickened in the regions of the bayonet contours (4, 14).

6. An arrangement according to at least one of the preceding claims, **characterised in that** the seal (3, 13) is provided in an annular groove in the hood.

7. An arrangement according to at least one of the preceding claims, **characterised in that** the seal (3, 13) is vulcanised on, glued on or connected in non-positive manner.

8. An arrangement according to at least one of the preceding claims, **characterised in that** two, three, four or more bayonet contours (4, 14) are provided on the periphery of the hood.

9. An arrangement according to at least one of the preceding claims, **characterised in that** instead of the screws (5, 15) with screw heads correspondingly similarly formed parts in the base body (1, 11) are provided for cooperating with the bayonet contours (4, 14), or the base body (1, 11) itself is formed correspondingly.

10. An arrangement according to at least one of the preceding claims, **characterised in that** the hood is made of steel, high-grade steel or plastics material.

11. An arrangement according to at least one of the preceding claims, **characterised in that** the bayonet contour (4, 14) has an insertion position (30), an incline and a latching-in region.

12. An arrangement according to at least one of the preceding claims, **characterised in that** the seal (3, 13) upon actuation of the bayonet catch is pressed on to the base body (1, 11) and deformed, so that a hermetic connection is produced.

13. An arrangement according to at least one of the preceding claims, **characterised in that** the region of the bayonet contour (4, 14) is covered from the outside by means of the seal (3, 13).

## Revendications

1. Agencement pour rendre étanche un évidement dans un corps de base (1, 11),
dans lequel une coiffe est posée sur la zone de l'évidement sur le corps de base (1, 11), laquelle recouvre en particulier la zone de l'évidement,
dans lequel cette coiffe présente un côté intérieur et un côté extérieur,
dans lequel un joint d'étanchéité (3, 13) est prévu sur la coiffe au moins dans la zone de liaison de la coiffe avec le corps de base (1, 11),
dans lequel au moins un contour en baïonnette (4, 14) est prévu sur la coiffe, lequel coopère avec des vis (5, 15) prévues dans le corps de base (1, 11), en particulier avec leurs têtes de vis, pour réaliser une liaison étanche entre le corps de base (1, 11) et la coiffe,
**caractérisé en ce que**
le joint d'étanchéité (3, 13) est prévu sur le côté extérieur de la coiffe,
et que le contour en baïonnette (4, 14) est réalisé sous la forme d'un évidement dans la paroi de coiffe estampé seulement dans le côté intérieur.

2. Agencement selon la revendication 1,
**caractérisé en ce que**
le contour en baïonnette (4, 14) est réalisé sous la forme d'un évidement continu dans la paroi de coiffe.

3. Agencement selon au moins une des revendications précédentes,
**caractérisé en ce que**
le corps de base (1, 11) est un carter de transmission ou un autre composant d'entraînement, comme un moteur électrique, un moteur convertisseur, un motoréducteur, un motoréducteur convertisseur, en particulier avec un bout d'arbre dépassant à travers son évidement.

4. Agencement selon au moins une des revendications précédentes,
**caractérisé en ce que**
l'épaisseur de paroi est épaissie dans la zone du contour en baïonnette (4, 14).

5. Agencement selon au moins une des revendications précédentes,
**caractérisé en ce que**
la coiffe est un corps de révolution dans lequel le contour en baïonnette (4, 14) est usiné, ou la coiffe correspond à un corps de révolution dans lequel l'épaisseur de paroi est épaissie dans les zones des contours en baïonnette (4, 14).

6. Agencement selon au moins une des revendications précédentes,
**caractérisé en ce que**
le joint d'étanchéité (3, 13) est prévu dans une rainure annulaire de la coiffe.

7. Agencement selon au moins une des revendications précédentes,
**caractérisé en ce que**
le joint d'étanchéité (3, 13) est vulcanisé, collé ou relié par liaison de force.

8. Agencement selon au moins une des revendications précédentes,
**caractérisé en ce que**
deux, trois, quatre ou plus contours en baïonnette (4, 14) sont prévus sur le pourtour de la coiffe.

9. Agencement selon au moins une des revendications précédentes,
**caractérisé en ce que**
à la place des vis (5, 15) avec des têtes de vis, des pièces conformées de manière analogue sont prévues dans le corps de base (1, 11) pour coopérer avec les contours en baïonnette (4, 14) ou le corps de base (1, 11) lui-même est conformé de manière correspondante.

10. Agencement selon au moins une des revendications précédentes,
**caractérisé en ce que**
la coiffe est réalisée en acier, acier inoxydable ou matière plastique.

11. Agencement selon au moins une des revendications précédentes,
**caractérisé en ce que**
le contour en baïonnette (4, 14) présente une position d'insertion (30), un chanfrein et une zone d'encliquetage.

12. Agencement selon au moins une des revendications précédentes,
**caractérisé en ce que**
lors de l'actionnement de la fermeture à baïonnette, le joint d'étanchéité (3, 13) est pressé sur le corps de base (1, 11) et déformé de sorte qu'il se crée une liaison étanche.

13. Agencement selon au moins une des revendications précédentes,
**caractérisé en ce que**
la zone du contour en baïonnette (4, 14) est recouverte par l'extérieur au moyen du joint d'étanchéité (3, 13).
